# EUROPÄISCHE PATENTSCHRIFT

(11) **EP 2 906 379 B1**
(45) Veröffentlichungstag und Bekanntmachung des Hinweises auf die Patenterteilung: **30.11.2016**
(21) Anmeldenummer: 13771072.9
(22) Anmeldetag: 27.09.2013
(51) Int. Cl.: B23C 5/10

(54) **ZERSPANUNGSWERKZEUG ZUR BEARBEITUNG UND VERFAHREN ZUM TRENNEN EINES BAUTEILS AUS FASERVERSTÄRKTEM KUNSTSTOFF**
CUTTING TOOL FOR PROCESSING AND METHOD FOR SEPARATING A WORKPIECE OF FIBER REINFORCED PLASTIC
OUTIL DE COUPE POUR USINAGE ET PROCEDE DE SEPARATION D'UNE PIÈCE PLASTIQUE RENFORCÉ DE FIBRES

(30) Priorität: 10.10.2012 DE 102012019799
(43) Veröffentlichungstag der Anmeldung: 19.08.2015
(73) Patentinhaber: Hufschmied Zerspanungssysteme GmbH, 86399 Bobingen (DE)
(72) Erfinder: HUFSCHMIED, Ralph, 86399 Bobingen (DE)
(74) Vertreter: Munk, Ludwig Hubert
(86) Internationale Anmeldenummer: PCT/EP2013/002913
(87) Internationale Veröffentlichungsnummer: WO 2014/056583

(56) Entgegenhaltungen:
- DE-T5-112009 000 013
- US-A- 6 164 876
- US-A1- 2004 120 777

## Beschreibung

Die Erfindung betrifft ein Zerspanungswerkzeug zur Bearbeitung von faserverstärkten Werkstoffen gemäß dem Oberbegriff des Anspruchs 1 und ein Verfahren zum Trennen dünner Platten aus faserverstärktem Kunststoff gemäß dem Oberbegriff des Anspruchs 14.

Gattungsgemäße Zerspanungswerkzeuge und insbesondere Stirnfräser zur Bearbeitung von faserverstärkten Werkstoffen (Faserverbundwerkstoffen) wie CFK, GFK oder mit Polyesterfäden verstärkten Kunststoffen haben neben einer Mehrzahl Hauptspannuten, welche eine entsprechende Mehrzahl Vorbearbeitungsstege in Umfangsrichtung voneinander beabstanden und mit dem jeweils nacheilenden Vorbearbeitungssteg einen Schneidkeil mit einer Vorbearbeitungsschneide bilden, noch eine der Mehrzahl Hauptspannuten entsprechende Mehrzahl jeweils einer der Hauptspannuten in Umfangsrichtung nacheilender Nebenspannuten, welche jeweils einen Nachbearbeitungssteg von dem in Umfangsrichtung voreilenden Vorbearbeitungssteg in Umfangsrichtung beabstanden und mit dem Nachbearbeitungssteg einen Schneidkeil mit einer Nachbearbeitungsschneide bilden.

Dies entspricht den aus der Metallbearbeitung bekannten Schlicht-Schrupp-Fräsern, wie z.B. gemäß der deutschen Patentschrift DE 3742942 C1, der deutschen Gebrauchsmusterschrift DE 8609688 U1 oder der US-Patentschrift US 4 285 618 B, bei denen jeder Schruppschneide eine nacheilende Schlichtschneide zugeordnet ist.

Neben dem aus der Metallbearbeitung bekannten Zweck dieser Anordnung, nämlich sowohl die Grobbearbeitung, also einen Schrupparbeitsgang, als auch die Nachbearbeitung, also einen Nachreib- oder Schlichtarbeitsgang, in einem einzigen Arbeitsgang bewerkstelligen zu können, und so zu einer guten Oberflächenqualität bei geringerer Bearbeitungsdauer zu gelangen, soll dadurch bei der Fräs- und Bohrbearbeitung von faserverstärkten Werkstoffen ein zusätzliches Problem bekämpft werden. Denn dabei kommt es häufig zu einem Ausreißen einzelner Fasern oder zu einem Aufspleißen des Fadens, wenn ein Werkstück aus einem solchen Werkstoff mit herkömmlichen Werkzeugen für die zerspanende Bearbeitung bearbeitet wird. Einzelne Fasern werden also aus dem Rand der Bearbeitungsstelle herausgerissen, wieder andere beim Vorbeilauf des Werkzeugs an den Rand der Bearbeitungsstelle gedrückt, so dass sie erst an einem über den Rand der Bearbeitungsstelle überstehenden Ende geschnitten werden und daher nach der Bearbeitung über den Rand überstehen. Durch das Nachbearbeiten soll für ein Abtrennen der abstehenden Faserenden gesorgt werden und gleichzeitig eine relativ stumpfe, wenig zu einem Herausreißen von Einzelfasern neigenden Auslegung der Vorbearbeitungsschneiden erlaubt werden, welche die Hauptschneidarbeit leisten.

So zeigt z.B. die deutsche Gebrauchsmusterschrift DE 202 09 768 U einen Stufenbohrer zur Bearbeitung von Sandwich-Materialien, bei dem die Hauptschneiden an der Stufe zueinander so versetzt sind, dass die eine Hauptschneide vorschneidet und die andere nachreibt. Die deutsche Gebrauchsmusterschrift DE 202 11589 U1 zeigt einen weiteren Bohrer zur Bearbeitung von Sandwich-Werkstücken, bei dem zwei Vorbearbeitungsstege mehr oder weniger stumpf als Räumwerkzeuge ausgebildet sind und die in Umfangsrichtung jeweils nacheilenden Nachbearbeitungsstege mit scharfen Nebenschneiden als Reibahlen. Ähnliche Bohrer zeigen die Gebrauchsmusterschriften DE 202 11592 U und DE 203 04580 U1, wobei dort die breiten Rundschlifffasen zur Aussteifung des Bohrlochs und abgerundete Schneidenecken zur Vermeidung des Fadenausreißens zum Einsatz kommen.

Bei dem in der japanischen Schrift JP 2010-234462A gezeigten Werkzeug wechseln linksverdrallte mit unverdrallten Schneiden ab. Die europäische Patentanmeldung EP 2 554 309 A1 zeigt ein Werkzeug, welches einerseits geradlinig verlaufende Schneiden und andererseits rechtsverdrallte Schneiden aufweist und zur Zerspanung von Werkstoffen wie kohlefaserverstärktem Plastik vorgesehen ist.

Einen Stirnfräser zur Bearbeitung von faserverstärkten Kunststoffen, bei dem die Idee einer Funktionentrennung in die Hauptschneidarbeit erledigende, vorlaufende Bearbeitungsstege und lediglich nachbearbeitende, nacheilende Stege ebenfalls umgesetzt worden ist, zeigt die deutsche Patentschrift DE 11 2009 000 013 B4. Dort haben die vorlaufenden Vorbearbeitungsstege einen Linksdrall und die nachlaufenden Nachbearbeitungsstege einen Rechtsdrall. Dies soll dort zur Vermeidung von Graten dienen.

Ein Zerspanungswerkzeug gemäß dem Oberbegriff des Anspruchs 1 ist aus US 6 164 876 bekannt.

Hiervon ausgehend liegt der vorliegenden Erfindung im Hinblick auf die Idee der Funktionenteilung in vorlaufende Grobbearbeitungsstege und nachlaufende Feinbearbeitungsstege bei Zerspanungswerkzeugen zur Bearbeitung von faserverstärkten Werkstoffen die Aufgabe zugrunde, einen Stirnfräser zur Bearbeitung solcher Werkstoffe so weiterzubilden, dass noch bessere Oberflächenqualitäten erreicht werden können. Insbesondere soll ein Werkzeug zum Trennen dünner Platten aus faserverstärkten Werkstoffen geschaffen werden. Damit soll ein Verfahren zum Trennen dünner Platten aus faserverstärkten Werkstoffen verbessert werden.

Diese Aufgabe wird hinsichtlich des Zerspanungswerkzeugs mit den Merkmalen des Anspruchs 1 gelöst, hinsichtlich des Trennverfahrens mit den Merkmalen des Anspruchs 14.

Das erfindungsgemäße Zerspanungswerkzeug zeichnet sich dabei zum einen dadurch aus, dass sich die Vorbearbeitungsschneiden abwechselnd mit Rechtsdrall um und unverdrallt oder zumindest nahezu unverdrallt entlang der Werkzeugachse erstrecken. Zum anderen zeichnet es sich dadurch aus, dass sich die den rechtsverdrallten Vorbearbeitungsschneiden nacheilenden Nachbearbeitungsschneiden unverdrallt oder zumindest nahezu unverdrallt entlang der Werkzeugachse erstrecken und sich die den unverdrallten oder zumindest nahezu unverdrallten Vorbearbeitungsschneiden nacheilenden Nachbearbeitungsschneiden rechtsverdrallt um die Werkzeugachse erstrecken.

Es wird also auf bekannte Weise eine Funktionentrennung in eine Grobbearbeitungsfunktion, also ein Schruppen und eine Feinbearbeitungsfunktion, also ein Schlichten vorgenommen, wobei die unterschiedlichen Bearbeitungsfunktionen mittels unterschiedlich ausgebildeter Schneiden, nämlich den Vor- bzw. Grobbearbeitungsschneiden an Vorbearbeitungsstegen und jeweils nacheilenden Nach- bzw. Feinbearbeitungsschneiden an Nachbearbeitungsstegen ausgeführt werden. Wie ebenfalls bekannt folgt auf jede der Vorbearbeitungsschneiden eine der Nachbearbeitungsschneiden. Ferner bekannt ist, dass sich dadurch eine Aufteilung der an der Matrix des faserverstärkten Werkstoffes auftretenden Belastungen auf den Angriff der vorlaufenden Vorbearbeitungsschneide und den Angriff der nachlaufenden Nachbearbeitungsschneide ergibt, wobei der größere Lastanteil bei der Vorbearbeitung mit der voreilenden Vorbearbeitungsschneide auf das Material aufgebracht wird und der kleinere Lastanteil bei der Feinbearbeitung mit der nacheilenden Nachbearbeitungsschneide.

In den meisten Bearbeitungsfällen wird mit Rechtsdrall geschnitten bzw. zerspant. Das bedeutet, dass bei einem üblicherweise rechtsdrehenden Zerspanungswerkzeug in Axialrichtung ausschließlich Zuglasten auf das Material aufgebracht werden. Der Erfinder hat eine positive Wirkung auf die Oberflächengüte des bearbeiteten Bauteils festgestellt, wenn beim Schneiden mit den einzelnen Schneiden die auf das bearbeitete Bauteil wirkenden Lasten aus abwechselnden Lastrichtungen kommen.

Erfindungsgemäß ist daher vorgesehen, einer mit Rechtsdrall um die Werkzeugachse verlaufenden Vorbearbeitungsschneide jeweils eine nicht rechts verdrallte, sondern unverdrallte Nachbearbeitungsschneide folgen zu lassen, welche dann das soeben mit der vorlaufenden rechtsverdrallten Vorbearbeitungsschneide abgetrennte Material von der bearbeiteten Werkstückoberfläche reibt. Durch die Änderung der Verdrallungsrichtung kommen die beim Angriff der beiden aufeinander folgenden Schneiden an der Matrix des faserverstärkten Werkstoffes auftretenden Belastungen jeweils aus unterschiedlichen Richtungen, so dass ein gewisser Ausgleich zumindest der in Axialrichtung wirkenden Lastanteile an der Werkstückoberfläche erfolgt.

Faserverstärkte Werkstoffe wie z.B. CFK sind relativ inhomogen, so dass es sein kann, dass Material bei Angriff der Schneide mit einer bestimmten Lastrichtung dem Abtrennen entgehen kann, bei Angriff mit einer anderen Lastrichtung jedoch nicht. Folgt nun auf die rechtsverdrallte Vorbearbeitungsschneide eine unverdrallte, neutrale Nachbearbeitungsschneide, wird Material, z.B. Fadenenden welche möglicherweise bei Angriff der Vorbearbeitungsschneide ausweichen konnten, von der Nachbearbeitungsschneide erfasst und abgetrennt.

Druck- und Zuglast sollen sich möglichst abwechseln. Aus geometrischen Gründen ist eine Verdrallung der Nachbearbeitungsschneide in Gegenrichtung zur Vorbearbeitungsschneide jedoch nicht möglich, ohne dass sich eine Hauptspannut und die jeweils nachlaufenden Nebenspannut und damit die Vor- und Nachbearbeitungsschneide kreuzen. Deshalb ist ein unverdrallter und kein linksverdrallter Verlauf der der rechtsverdrallten Vorbearbeitungsschneide nacheilenden Nachbearbeitungsschneide vorgesehen. Anstatt einer vollständig unverdrallten Nachbearbeitungsschneide kann aber auch eine nahezu unverdrallte Nachbearbeitungsschneide vorgesehen sein, also eine Nachbearbeitungsschneide mit einem gegenüber dem Rechtsdrall der direkt vorlaufenden Vorbearbeitungsschneide kleinen bzw. kleineren Rechtsdrall, wobei auch ein kleiner bzw. betragsmäßig kleinerer Linksdrall denkbar wäre.

Wenn man nur eine vorlaufende Vorbearbeitungsschneide und die nachlaufenden Nachbearbeitungsschneide betrachtet gelingt damit schon ein gewisser Ausgleich der auf die Harzmatrix des faserverstärkten Werkstücks wirkenden Druck- und Zugkräfte. Es ist aber im allgemeinen so, dass an der Vorbearbeitungsschneide die Hauptschneidarbeit geleistet wird und beim Vorbeilauf der Nachbearbeitungsschneide nur noch eine kleinerer Lastanteil auf das Material wirkt. Würden alle Vorbearbeitungsschneiden mit Rechtsdrall verlaufen würde sich daher eine ziehende Vorzugsschneidrichtung ausbilden, da der Lastanteil, den die Nachbearbeitungsschneiden auf das Werkstück aufbringen gegenüber dem Lastanteil der Vorbearbeitungsschneiden klein wäre.

Erfindungsgemäß wechseln daher nicht nur rechtsverdrallte Vorbearbeitungsschneiden mit unverdrallten Nachbearbeitungsschneiden ab. Vielmehr wechselt auch die Richtung des Dralls von jeder der Vorbearbeitungsschneiden gegenüber der in Umfangsrichtung nächsten Vorbearbeitungsschneide von rechtsverdrallt auf unverdrallt, wobei anstatt einer vollständig unverdrallten Vorbearbeitungsschneide auch eine nahezu unverdrallte Vorbearbeitungsschneide vorgesehen sein kann, also eine Vorbearbeitungsschneide mit einem gegenüber dem Rechtsdrall der direkt vorlaufenden Vorbearbeitungsschneide kleinen bzw. kleineren Rechtsdrall, wobei auch ein kleiner bzw. betragsmäßig kleinerer Linksdrall denkbar wäre. Auf eine unverdrallt oder nahezu unverdrallt entlang der Werkzeugachse verlaufenden Vorbearbeitungsschneide folgt dann jeweils eine rechts verdrallte Nachbearbeitungsschneide.

Mit dem erfindungsgemäßen Zerspanungswerkzeug lassen sich Oberflächengüten erzielen, die weit über die bei herkömmlichen Werkzeugen mit gleichverdrallten, abwechselnden Schlicht- und Schruppschneiden zu erwartende Qualität hinausgehen.

Als besonders vorteilhaft hat sich die erfindungsgemäße Werkzeuggeometrie zum Trennen von Platten aus faserverstärktem Kunststoff wie z.B. CFK oder GFK mit geringer Stärke, beispielsweise unter 3mm oder sogar unter 1,5 mm erwiesen. Denn diese Platten bestehen im Regelfall aus einzelnen miteinander laminierten Lagen des Werkstoffs und haben eine starke Schwingungsneigung, die immer wieder zu Materialschädigungen geführt hat, wenn bei diesen Plattten Trennschnitte mit herkömmlichen Schlicht-Schrupp-Fräsern für die CFK-Bearbeitung vorgenommen wurden. Durch die wechselnde Verdrillung der Schneiden kommt es zu einer Schwingungsberuhigung und damit zu einem wesentlich saubereren Trennschnitt.

Als geeignete Werte für den Drallwinkel der unverdrallten oder nahezu unverdrallten Vor- und Nachbearbeitungsschneiden hat sich ein Bereich von -2 bis 2° herausgestellt, wobei diese Vor- und Nachbearbeitungsschneiden bevorzugt vollständig unverdrallt mit 0° Drallwinkel verlaufen. Als geeignete Werte für den Drallwinkel der rechtsverdallten Schneiden hat sich ein Bereich von 4° bis 10°, insbesondere 6° bis 10° herausgestellt, bevorzugt ein Drallwinkel von 8°. Der Drallwinkel ist dabei der Winkel der Projektion der Schneide in eine durch die Werkzeugachse verlaufen Ebene gegenüber der Werkzeugachse, wobei ein Linksdrall mit einem negativen Wert und ein Rechtsdrall mit einem positiven Wert angegeben ist. Bei in Rechtsdrehrichtung angetriebenem Werkzeug ist also die rechtsverdrallte Spannut zuerst an der Werkzeugspitze am Angriffspunkt, bei Linksdrall dagegen zuletzt.

Vorteilhaft ist der Spanwinkel dabei an allen Nachbearbeitungsschneiden größer ist als der Spanwinkel an der jeweils voreilenden Vorbearbeitungsschneide. D.h., die als Schlichtschneiden dienenden Nachbearbeitungsschneiden sind schärfer als die jeweils voreilende Vorbearbeitungsschneiden. Vorteilhaft sind alle Nachbearbeitungsschneiden auch schärfer als jede der Vorbearbeitungsschneiden. Es wäre aber ein negativer Spanwinkel an allen oder zumindest einem Teil der Vorbearbeitungsschneiden denkbar. D.h., diese könnten als relativ stumpfe Räumwerkzeuge ausgebildet sein.

Besonders vorteilhaft ist es dabei, wenn der Spanwinkel an allen Vorbearbeitungsschneiden unterschiedlich ist. Besonders vorteilhaft ist es ferner, wenn der Spanwinkel auch an allen Nachbearbeitungsschneiden unterschiedlich ist. Dahinter steckt die Erkenntnis, dass es sich bei faserverstärkten Kunststoffen um relativ inhomogene Werkstoffe handelt, die eine inhomogen verteilte Härte aufweisen, also in örtlich enger Abfolge einmal relativ hart, einmal relativ weich sein können. Ergänzend zu dem wechselnden Drall der Schneiden wird durch die unterschiedlichen Spanwinkel versucht, diese Inhomogenität am Werkzeug nachzubilden. Bei entsprechend hohen Drehzahlen besteht dabei die Hoffnung, an der bearbeiteten Stelle zumindest einmal mit dem richtigen Spanwinkel vorbeizukommen.

Vorteilhaft ist es ferner, wenn die Vorbearbeitungsschneiden jeweils ohne Rundschlifffasen in eine Freifläche übergehen, so dass ein Einreiben des abgetrennten Materials in die bearbeitete Oberfläche weitestgehend vermieden wird. Analog ist es auch an den Nachbearbeitungsstegen bevorzugt, wenn dort die Nachbearbeitungsschneiden direkt und ohne Rundschlifffasen in eine Freifläche übergehen.

Entsprechend den vorteilhaft unterschiedlich gewählten Spanwinkeln ist es dabei vorteilhaft, wenn der Freiwinkel an allen Vorbearbeitungsstegen unterschiedlich ist, um dadurch der Inhomogenität des bearbeiteten Werkstoffs gerecht zu werden. Dazu ist es auch vorteilhaft, wenn der Freiwinkel an allen Nachbearbeitungsschneiden ebenfalls unterschiedlich ist.

In diesem Sinne wäre es sogar denkbar, die Drallwinkel der bevorzugt zumindest zwei rechtsverdrallten Vorbearbeitungsschneiden unterschiedlich zu wählen, ebenso die Drallwinkel der bevorzugt ebenfalls zumindest zwei unverdrallten bzw. nahezu unverdrallten Vorbearbeitungsschneiden. Das gleiche gilt für die Nachbearbeitungsschneiden.

Denn Ausführungen des Zerspanungswerkzeugs als Stirnfräser mit vier, in Einzelfällen und besonders bei größeren Werkzeugdurchmessern auch sechs Vorbearbeitungsschneiden, also zwei bzw. drei rechtsverdrallte und zwei bzw. drei unverdrallte, haben sich in Tests als besonders aussichtsreich erwiesen. Weiterhin hat sich eine im Sinne einer einfachen Werkzeuggeometrie übliche, äquidistante Verteilung der Vorbearbeitungsschneiden über den Umfang auch für die Weiterbildung des erfindungsgemäßen Werkzeugs als vorteilhaft erwiesen.

Da die Hauptzerspanungs- bzw. Schneidarbeit an den Vorbearbeitungsstegen erfolgt und damit auch die Materialabfuhr hauptsächlich durch die Hauptspannnuten, hat es sich ferner bewährt, wenn der Phasenwinkel von einer Schneidenecke an jeder vorlaufenden Vorbearbeitungsschneide zu einer Schneidenecke an der jeweils nachlaufenden Nachbearbeitungsschneide kleiner ist als der Phasenwinkel von der Schneidenecke jeder nachlaufenden Nachbearbeitungsschneide zur Schneidenecke an der jeweils nachlaufenden Vorbearbeitungsschneide.

Dabei wäre es im Sinne des Ausgleichs der Materialinhomogenität durchaus denkbar, die Nachbearbeitungsschneide jeweils mit unterschiedlichem Winkelabstand zur jeweils vorlaufenden Vorbearbeitungsschneide vorzusehen, solange dieser Winkelabstand kleiner ist als derjenige zur nächsten, nacheilenden Vorbearbeitungsschneide. Im Sinne einer einfachen Werkzeuggeometrie ist es jedoch, wenn die Nachbearbeitungsschneiden äquidistant über den Umfang verteilt sind.

Bei einem Werkzeug mit vier Vorbearbeitungsschneiden und Nachbearbeitungsschneiden an allen Nachbearbeitungsschneiden haben sich dabei in Versuchen Werte von in etwa 20° - 35° als geeignet für den Phasenwinkel von der Schneidenecke der vorlaufenden Vorbearbeitungsschneide zur Schneidenecke an der jeweils nachlaufenden Nachbearbeitungsschneide erweisen, bei einem Werkzeug mit sechs Vorbearbeitungsschneiden Werte von 15° - 25°.

Weiterhin hat es sich als vorteilhaft herausgestellt, wenn die Schneidenecken zumindest an den Vorbearbeitungsschneiden leicht abgerundet sind, vorzugsweise mit einem Radius von 0,05 mm - 0,5 mm, insbesondere 0,1 mm - 0,5 mm, und dadurch eine scharfe Schneidenecke oder eine Fase mit zwei Schneidenecken vermieden wird. Denn diese neigen dazu, am zu zerspanenden Material einzuhaken und dabei Fäden bzw. Fasern aus der bearbeiteten Oberfläche zu ziehen (Delamination).

Weiterhin vorteilhaft im Sinne einer einfachen Werkzeuggeometrie bei Vermeidung gekreuzter Schneiden ist es, wenn die Schneidenlänge der Vor- und Nachbearbeitungsschneiden einem Wert von maximal 2 mal dem Werkzeugdurchmesser entspricht.

Es hat sich gezeigt, dass für den Anstieg des Spanwinkels an den Vorbearbeitungsschneiden ausgehend von einer Vorbearbeitungsschneide mit dem kleinsten Spanwinkel bis zu einer Vorbearbeitungsschneide mit dem größten Spanwinkel Schritte von 3° - 5° die besten Ergebnisse im Hinblick auf eine möglichst glatte Oberfläche liefern. An einem vielversprechenden Versuchswerkzeug mit vier Vor- und Nachbearbeitungsschneiden war der Spanwinkel 5°, 8°, 11°, 14° an den vier Vorbearbeitungsschneiden. Es wird davon ausgegangen, dass der Anstieg vorzugsweise reihum um den Umfang ansteigend ist, bis wieder die Vorbearbeitungsschneide mit dem kleinsten Spanwinkel auf die Vorbearbeitungsschneide mit dem größten Spanwinkel folgt.

Es hat sich ferner gezeigt, dass auch für den Anstieg des Freiwinkels ausgehend von einem Vorbearbeitungssteg mit dem kleinsten Freiwinkel bis zu einem Vorbearbeitungssteg mit dem größten Freiwinkel Schritte von 3° - 5° die besten Ergebnisse im Hinblick auf eine möglichst glatte Oberfläche liefern. An einem vielversprechenden Versuchswerkzeug mit vier Vor- und Nachbearbeitungsschneiden war der Freiwinkel 12°, 17°, 22°, 27° an den vier Vorbearbeitungsstegen.

Dabei wird von einem kombinatorischen Einfluss des Freiwinkelanstiegs und des Spanwinkelanstiegs an den Vorbearbeitungsstegen ausgegangen. D.h., dass der kleinste Freiwinkel bevorzugt an dem Vorbearbeitungssteg mit der Vorbearbeitungsschneide mit dem kleinsten Spanwinkel vorgesehen ist und der Freiwinkel an den einzelnen Vorbearbeitungsstegen mit dem dortigen Spanwinkel ansteigt. Bei dem obenstehend angesprochenen, vielversprechenden Versuchswerkzeug war beispielsweise ein Freiwinkel von 12° an der Vorbearbeitungsschneide mit 5° Spanwinkel vorgesehen, ein Freiwinkel von 17° an der Vorbearbeitungsschneide mit 8° Spanwinkel, ein Freiwinkel von 22° an der Vorbearbeitungsschneide mit 11° Spanwinkel, und ein Freiwinkel von 27° an der Vorbearbeitungsschneide mit 14° Spanwinkel.

Auch für den Anstieg der Spanwinkel an den Nachbearbeitungsstegen haben sich Schrittweiten von 3° - 5° als geeignet erwiesen, beispielsweise bei einem Werkzeug mit vier Vor- und Nachbearbeitungsschneiden 10°, 14°, 18°, 22°. Anders als bei dem gleichlaufenden kombinatorischen Effekt des Freiwinkelanstiegs und des Spanwinkelanstiegs an den Vorbearbeitungsstegen ist es jedoch vorteilhaft, wenn der Spanwinkelanstieg an den Nachbearbeitungsschneiden reziprok zum Spanwinkelanstieg an den Vorbearbeitungsschneiden verläuft. D. h., dass der Spanwinkel bevorzugt an derjenigen Nachbearbeitungsschneide am größten ist, die derjenigen Vorbearbeitungsschneide mit dem kleinsten Spanwinkel nacheilt, und mit dem ansteigenden Spanwinkel an der jeweils voreilenden Vorbearbeitungsschneide fällt, bis der Spanwinkel an derjenigen Nachbearbeitungsschneide am kleinsten ist, die der Vorbearbeitungsschneide mit dem größten Spanwinkel nacheilt. Dadurch kann die sich aus den an einer Vorbearbeitungsschneide und an der nacheilenden Nachbearbeitungsschneide auftretenden Einzelschnittkräften ergebende Gesamtschnittkraft für alle Vor- bzw. Nachbearbeitungsschneidenpaare am Zerspanungswerkzeug auf einem möglichst gleichmäßigen Niveau gehalten werden.

Entsprechend ist daher auch der Freiwinkel bevorzugt an derjenigen Nachbearbeitungsschneide am größten, die derjenigen Vorbearbeitungsschneide mit dem kleinsten Freiwinkel nacheilt, und mit dem ansteigenden Freiwinkel an der jeweils voreilenden Vorbearbeitungsschneide fällt, bis der Freiwinkel an derjenigen Nachbearbeitungsschneide am kleinsten ist, die der Vorbearbeitungsschneide mit dem größten Spanwinkel nacheilt. Auch hier haben sich Schrittweiten von 3° - 5° als vorteilhaft für den Freiwinkelanstieg an den Nachbearbeitungsstegen erwiesen.

Bei der Reparatur eines beschädigten Bauteils aus faserverstärktem Kunststoff wie z.B. CFK wird häufig das sogenannte Schäften eingesetzt, insbesondere, um ausgerissene Bohrungen oder dergleichen zu flicken. Dazu werden terrassenförmig angeordnete Treppenstufen, beispielsweise um die ausgerissene Bohrung herum in einer sehr feinen Auflösung, z.B. in einer Auflösung von 0,1 mm - 0,5 mm Höhe und Breite erzeugt.

Bisher war man dabei auf den Einsatz von Laser oder Wasserstrahl beschränkt. Bei der Verwendung von Lasern können jedoch sehr leicht schwere Schädigungen der Harzmatrix des zu reparierenden Bauteils hervorgerufen werden. Per Wasserstrahl dauert es dagegen zu lang, um wirtschaftlich eingesetzt werden zu können.

Mit dem erfahrungsgemäßen Stirnfräser lassen sich erstmals die zur Reparatur eines beschädigten Bauteils aus faserverstärktem Kunststoff wie z.B. CFK durch Schäften nötigen, terrassenförmig angeordneten Treppenstufen in der für das Schäften nötigen Auflösung von 0,1 mm - 0,5 mm bei Höhe und Breite und der für das anschließende Verkleben nötigen Oberflächenglattheit per Fräsen herstellen.

Deshalb ist auch ein Verfahren Gegenstand der Erfindung, bei dem zu Reparaturzwecken terrassenförmig angeordnete Treppenstufen an einem Bauteil aus faserverstärktem Kunststoff wie z.B. CFK, beispielsweise um eine ausgerissene Bohrung in dem Bauteil herum in einer sehr feinen Auflösung, z.B. in einer Auflösung von 0,1 mm - 0,5 mm Höhe und Breite per Fräsen hergestellt werden, insbesondere mit einem erfindungsgemäßen oder einem gemäß der vorliegenden Anmeldung weitergebildeten Fräser, wobei das Bauteil anschließend mit einem Flicken mit einer zu den terrassenförmig verlaufenden Treppenstufen komplementären dreidimensionalen Struktur verklebt wird.

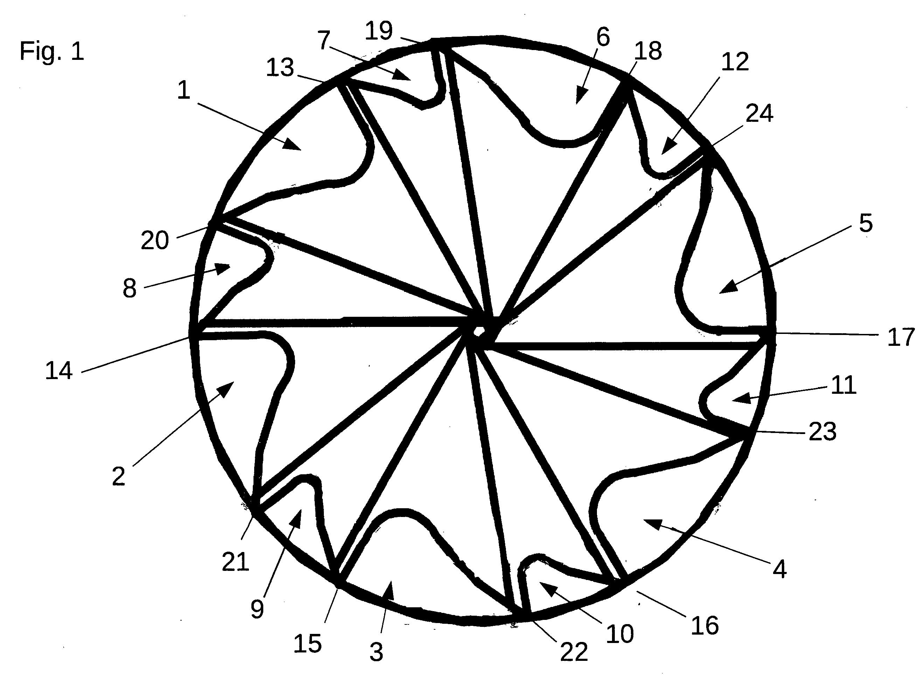

Im Folgenden wird anhand der beiliegenden Zeichnung eine Ausführungsform der Erfindung näher erläutert. Die Figur 1 zeigt in schematisierter Form eine Stirnansicht der Werkzeugspitze eines Stirnfräsers gemäß einer Ausführungsform der Erfindung.

Der Stirnfräser weist dabei 6 Hauptspannuten 1, 2, 3, 4, 5, 6 auf, welche mit einem jeweils nacheilenden, sich entlang der Werkzeugachse erstreckenden Vorbearbeitungssteg einen Schneidkeil mit einer Vorbearbeitungsschneide 13, 14, 15, 16, 17, 18 bilden. In Umfangsrichtung jeweils zwei der Hauptspannuten 1, 2, 3, 4, 5, 6 zwischengeordnet sind dabei 6 Nebenspannuten 7, 8, 9, 10, 11, 12 vorgesehen. Die Nebenspannuten eilen also jeweils einer der Hauptspannuten in Umfangsrichtung nach. Jede Nebenspannut 7, 8, 9, 10, 11, 12 beabstandet dabei einen Nachbearbeitungssteg von dem in Umfangsrichtung voreilenden Vorbearbeitungssteg in Umfangsrichtung. Mit diesem Nachbearbeitungssteg bildet die jeweilige Nebenspannut 7, 8, 9, 10, 11, 12 einen Schneidkeil mit einer Nachbearbeitungsschneide 19, 20, 21, 22, 23, 24.

Die Vorbearbeitungsschneiden 13, 14, 15, 16, 17, 18 sind dabei abwechselnd mit Rechtsdrall um die Werkzeugachse und unverdrallt entlang der Werkzeugachse vorgesehen. D.h. dass die Vorbearbeitungsschneiden 13, 15, 17, rechts verdrallt sind, wohingegen die Vorbearbeitungsschneiden 14, 16, 18 unverdrallt sind. Dabei erstrecken sich die den rechtsverdrallten Vorbearbeitungsschneiden 13, 15, 17 direkt nacheilenden Nachbearbeitungsschneiden 19, 21, 23 unverdrallt entlang der Werkzeugachse, wohingegen die den unverdrallten Vorbearbeitungsschneiden 14, 16, 18 nacheilenden Nachbearbeitungsschneiden 20, 22, 24 sich rechtsverdrallt um die Werkzeugachse strecken.

## Patentansprüche

1. Zerspanungswerkzeug, insbesondere Stirnfräser zur Bearbeitung von faserverstärkten Werkstoffen wie CFK, GFK oder mit Polyesterfäden verstärkten Kunststoffen, mit
einer Mehrzahl von vier oder sechs Hauptspannuten (1, 2, 3, ,4, 5, 6), welche mit einem jeweils nacheilenden Vorbearbeitungssteg einen Schneidkeil mit einer Vorbearbeitungsschneide (13, 14, 15, 16, 17, 18) bilden,
eine der Mehrzahl Hauptspannuten (1, 2, 3, ,4, 5, 6) entsprechende Mehrzahl jeweils einer der Hauptspannuten (1, 2, 3, ,4, 5, 6) in Umfangsrichtung nacheilender Nebenspannuten (7, 8, 9, 10, 11, 12), welche jeweils einen Nachbearbeitungssteg von dem in Umfangsrichtung voreilenden Vorbearbeitungssteg in Umfangsrichtung beabstanden und mit dem Nachbearbeitungssteg einen Schneidkeil mit einer Nachbearbeitungsschneide (19, 20, 21, 22, 23, 24) bilden,
**dadurch gekennzeichnet, dass**
sich die Vorbearbeitungsschneiden (13, 14, 15, 16, 17, 18) abwechselnd einerseits mit Rechtsdrall um und andererseits unverdrallt oder zumindest mit einem gegenüber dem Rechtsdrall der direkt vorlaufenden Vorbearbeitungsschneide betragsmäßig kleineren Drall entlang der Werkzeugachse erstrecken, wobei
sich die den rechtsverdrallten Vorbearbeitungsschneiden (13, 15, 17) nacheilenden Nachbearbeitungsschneiden (19, 21, 23) unverdrallt oder zumindest mit einem gegenüber dem Rechtsdrall der direkt vorlaufenden Vorbearbeitungsschneide betragsmäßig kleineren Drall entlang der Werkzeugachse erstrecken, und wobei
sich die den unverdrallten oder zumindest mit dem gegenüber dem Rechtsdrall der direkt vorlaufenden Vorbearbeitungsschneide (13, 15, 17) betragsmäßig kleineren Drall verlaufenden Vorbearbeitungsschneiden (14, 16, 18) nacheilenden Nachbearbeitungsschneiden (20, 22, 24) rechtsverdrallt um die Werkzeugachse erstrecken.

2. Zerspanungswerkzeug nach Anspruch 1, **dadurch gekennzeichnet, dass** der Spanwinkel an allen Nachbearbeitungsschneiden (19, 20, 21, 22, 23, 24) größer ist als der Spanwinkel an der jeweils voreilenden Vorbearbeitungsschneide (13, 14, 15, 16, 17, 18).

3. Zerspanungswerkzeug nach Anspruch 1 oder 2, **dadurch gekennzeichnet, dass** der Phasenwinkel von einer Schneidenecke an jeder vorlaufenden Vorbearbeitungsschneide (13, 14, 15, 16, 17, 18) zu einer Schneidenecke an der jeweils nachlaufenden Nachbearbeitungsschneide (19, 20, 21, 22, 23, 24) kleiner ist als der Phasenwinkel von der Schneidenecke jeder nachlaufenden Nachbearbeitungsschneide (19, 20, 21, 22, 23, 24) zur Schheidenecke an der jeweils nachlaufenden Vorbearbeitungsschneide (13, 14, 15, 16, 17, 18), und bei einem Werkzeug mit vier Vorbearbeitungsschneiden und Nachbearbeitungsschneiden an allen Nachbearbeitungsschneiden beispielsweise in etwa 20° - 35° beträgt, bei einem Werkzeug mit sechs Vorbearbeitungsschneiden (13, 14, 15, 16, 17, 18) und Nachbearbeitungsschneiden (19, 20, 21, 22, 23, 24) beispielsweise 15° - 25° an allen Nachbearbeitungsschneiden.

4. Zerspanungswerkzeug nach Anspruch 1, 2 oder 3, **dadurch gekennzeichnet, dass** die Vorbearbeitungsschneiden (13, 14, 15, 16, 17, 18) äquidistant über den Umfang verteilt sind und die Nachbearbeitungsschneiden (19, 20, 21, 22, 23, 24) äquidistant über den Umfang verteilt sind.

5. Zerspanungswerkzeug nach einem der vorhergehenden Ansprüche, **dadurch gekennzeichnet, dass** die Schneidenecken zumindest an den Vorbearbeitungsschneiden abgerundet sind, vorzugsweise mit einem Radius von 0,1 mm - 0,5 mm.

6. Zerspanungswerkzeug nach einem der vorhergehenden Ansprüche, **dadurch gekennzeichnet, dass** die Mehrzahl Hauptspannuten (1, 2, 3, ,4, 5, 6) und die entsprechende Mehrzahl jeweils einer der Hauptspannuten (1, 2; 3, ,4, 5, 6) in Umfangsrichtung nacheilender Nebenspannuten (7, 8, 9, 10, 11, 12) vier oder sechs ist.

7. Zerspanungswerkzeug nach einem der vorhergehenden Ansprüche, **dadurch gekennzeichnet, dass** die unverdrallten oder nahezu unverdrallten Vor- und Nachbearbeitungsschheiden (14, 16, 18, 19, 21, 23) mit einem Drallwinkel von -2 bis 2° verlaufen, bevorzugt unverdrallt mit 0°.

8. Zerspanungswerkzeug nach einem der vorhergehenden Ansprüche, **dadurch gekennzeichnet, dass** die rechtsverdrallten Schneiden (13, 15, 17, 20, 22, 24) mit einem Drallwinkel von 6° bis 10° verlaufen, bevorzugt mit 8°.

9. Zerspanungswerkzeug nach einem der vorhergehenden Ansprüche, **dadurch gekennzeichnet, dass** die Schneidenlänge der Vor- und Nachbearbeitungsschneiden (13, 14, 15, 16, 17, 18, 19, 20, 21, 22, 23, 24) einem Wert von maximal 2 mal dem Werkzeugdurchmesser entspricht.

10. Zerspanungswerkzeug nach einem der vorhergehenden Ansprüche, **dadurch gekennzeichnet, dass** der Spanwinkel an allen Vorbearbeitungsschneiden unterschiedlich ist, insbesondere ansteigend ausgehend von einer Vorbearbeitungsschneide mit dem kleinsten Spanwinkel bis zu einer Vorbearbeitungsschneide mit dem größten Spanwinkel, vorzugsweise reihum um den Umfang ansteigend bis wieder die Vorbearbeitungsschneide mit dem kleinsten Spanwinkel auf die Vorbearbeitungsschneide mit dem größten Spanwinkel folgt, beispielsweise in Schritten von 3° - 5°, wobei der Spanwinkel bei einem Werkzeug mit vier Vor- und Nachbearbeitungsschneiden beispielsweise 5°, 8°, 11°, 14° an den vier Vorbearbeitungsschneiden beträgt.

11. Zerspanungswerkzeug nach einem der vorhergehenden Ansprüche, **dadurch gekennzeichnet, dass** die Vorbearbeitungsschneiden jeweils ohne Rundschlifffasen in eine Freifläche übergehen, wobei der Freiwinkel an allen Vorbearbeitungsstegen insbesondere unterschiedlich ist, vorzugsweise jeweils um 3° - 5° ansteigend ausgehend von einem Vorbearbeitungssteg mit dem kleinsten Freiwinkel bis zu einem Vorbearbeitungssteg mit dem größten Freiwinkel, und beispielsweise bei einem Werkzeug mit vier Vor- und Nachbearbeitungsstegen 12°, 17°, 22°, 27° an den vier Vorbearbeitungsstegen beträgt, wobei vorzugsweise der kleinste Freiwinkel an dem Vorbearbeitungssteg mit der Vorbearbeitungsschneide mit dem kleinsten Spanwinkel vorgesehen ist und der Freiwinkel an den einzelnen Vorbearbeitungsstegen mit dem dortigen Spanwinkel ansteigt, beispielsweise bei einem Werkzeug mit vier Vor- und Nachbearbeitungsstegen mit aufsteigendem Spanwinkel von 5°, 8°, 11°, 14° ein Freiwinkel von 12° an der Vorbearbeitungsschneide mit 5° Spanwinkel, ein Freiwinkel von 17° an der Vorbearbeitungsschneide mit 8° Spanwinkel, ein Freiwinkel von 22° an der Vorbearbeitungsschneide mit 11° Spanwinkel, und ein Freiwinkel von 27° an der Vorbearbeitungsschneide mit 14° Spanwinkel.

12. Zerspanungswerkzeug nach einem der vorhergehenden Ansprüche, **dadurch gekennzeichnet, dass** der Spanwinkel an allen Nachbearbeitungsschneiden unterschiedlich ist, vorzugsweise jeweils um 3° - 5° ansteigend ausgehend von einer Nachbearbeitungsschneide mit dem kleinsten Spanwinkel bis zu einer Nachbearbeitungsschneide mit dem größten Spanwinkel, beispielsweise bei einem Werkzeug mit vier Vor- und Nachbearbeitungsschneiden 10°, 14°, 18°, 22°, wobei der Spanwinkel bevorzugt an derjenigen Nachbearbeitungsschneide am größten ist, die derjenigen Vorbearbeitungsschneide mit dem kleinsten Spanwinkel nacheilt, und mit dem ansteigenden Spanwinkel an der jeweils voreilenden Vorbearbeitungsschneide fällt, bis der Spanwinkel an derjenigen Nachbearbeitungsschneide am kleinsten ist, die der Vorbearbeitungsschneide mit dem größten Spanwinkel nacheilt.

13. Zerspanungswerkzeug nach einem der vorhergehenden Ansprüche, **dadurch gekennzeichnet, dass** der Freiwinkel an allen Nachbearbeitungsschneiden unterschiedlich ist, vorzugsweise jeweils um 3° - 5° ansteigend ausgehend von einer Nachbearbeitungsschneide mit dem kleinsten Freiwinkel bis zu einer Nachbearbeitungsschneide mit dem größten Freiwinkel, wobei der Freiwinkel bevorzugt an derjenigen Nachbearbeitungsschneide am größten ist, die derjenigen Vorbearbeitungsschneide mit dem kleinsten Freiwinkel nacheilt, und mit dem ansteigenden Freiwinkel an der jeweils voreilenden Vorbearbeitungsschneide fällt, bis der Freiwinkel an derjenigen Nachbearbeitungsschneide am kleinsten ist, die der Vorbearbeitungsschneide mit dem größten Spanwinkel nacheilt.

14. Verfahren zur Reparatur eines beschädigten Bauteils aus faserverstärktem Kunststoff wie z.B. CFK, wobei an dem abschließend mit einem Flicken zu verklebendem Bauteil Treppenstufen insbesondere mit einer Höhe und Breite von 0,1 mm - 0,5 mm, sich um eine Schadensstelle wie z.B. eine fehlerhafte Bohrung herum terasssenförmig zum Flicken hin öffnend oder entlang einer Wand terasssenförmig zum Flicken hin ansteigend eingearbeitet werden, **dadurch gekennzeichnet, dass** die Treppenstufen mit einem Stirnfräser nach einem der vorhergehenden Ansprüche eingefräst werden.

15. Verfahren zum Trennen von Platten aus faserverstärktem Kunststoff wie z.B. CFK mit einer Stärke von unter 3mm, bevorzugt unter 1,5 mm, **dadurch gekennzeichnet, dass** mit einem Stirnfräser nach einem der vorhergehenden Ansprüche 1 - 14 entlang der gewünschten Trennlinie gefräst wird.

## Claims

1. Zerspanungswerkzeug, insbesondere Stirnfräser zur Bearbeitung von faserverstärkten Werkstoffen wie CFK, GFK oder mit Polyesterfäden verstärkten Kunststoffen, mit
einer Mehrzahl von vier oder sechs Hauptspannuten (1, 2, 3, ,4, 5, 6), welche mit einem jeweils nacheilenden Vorbearbeitungssteg einen Schneidkeil mit einer Vorbearbeitungsschneide (13, 14, 15, 16, 17, 18) bilden,
eine der Mehrzahl Hauptspannuten (1, 2, 3, ,4, 5, 6) entsprechende Mehrzahl jeweils einer der Hauptspannuten (1, 2, 3, ,4, 5, 6) in Umfangsrichtung nacheilender Nebenspannuten (7, 8, 9, 10, 11, 12), welche jeweils einen Nachbearbeitungssteg von dem in Umfangsrichtung voreilenden Vorbearbeitungssteg in Umfangsrichtung beabstanden und mit dem Nachbearbeitungssteg einen Schneidkeil mit einer Nachbearbeitungsschneide (19, 20, 21, 22, 23, 24) bilden,
**dadurch gekennzeichnet, dass**
sich die Vorbearbeitungsschneiden (13, 14, 15, 16, 17, 18) abwechselnd einerseits mit Rechtsdrall um und andererseits unverdrallt oder zumindest mit einem gegenüber dem Rechtsdrall der direkt vorlaufenden Vorbearbeitungsschneide betragsmäßig kleineren Drall entlang der Werkzeugachse erstrecken, wobei
sich die den rechtsverdrallten Vorbearbeitungsschneiden (13, 15, 17) nacheilenden Nachbearbeitungsschneiden (19, 21, 23) unverdrallt oder zumindest mit einem gegenüber dem Rechtsdrall der direkt vorlaufenden Vorbearbeitungsschneide betragsmäßig kleineren Drall entlang der Werkzeugachse erstrecken, und wobei
sich die den unverdrallten oder zumindest mit dem gegenüber dem Rechtsdrall der direkt vorlaufenden Vorbearbeitungsschneide (13, 15, 17) betragsmäßig kleineren Drall verlaufenden Vorbearbeitungsschneiden (14, 16, 18) nacheilenden Nachbearbeitungsschneiden (20, 22, 24) rechtsverdrallt um die Werkzeugachse erstrecken.

2. Zerspanungswerkzeug nach Anspruch 1, **dadurch gekennzeichnet, dass** der Spanwinkel an allen Nachbearbeitungsschneiden (19, 20, 21, 22, 23, 24) größer ist als der Spanwinkel an der jeweils voreilenden Vorbearbeitungsschneide (13, 14, 15, 16, 17, 18).

3. Zerspanungswerkzeug nach Anspruch 1 oder 2, **dadurch gekennzeichnet, dass** der Phasenwinkel von einer Schneidenecke an jeder vorlaufenden Vorbearbeitungsschneide (13, 14, 15, 16, 17, 18) zu einer Schneidenecke an der jeweils nachlaufenden Nachbearbeitungsschneide (19, 20, 21, 22, 23, 24) kleiner ist als der Phasenwinkel von der Schneidenecke jeder nachlaufenden Nachbearbeitungsschneide (19, 20, 21, 22, 23, 24) zur Schheidenecke an der jeweils nachlaufenden Vorbearbeitungsschneide (13, 14, 15, 16, 17, 18), und bei einem Werkzeug mit vier Vorbearbeitungsschneiden und Nachbearbeitungsschneiden an allen Nachbearbeitungsschneiden beispielsweise in etwa 20° - 35° beträgt, bei einem Werkzeug mit sechs Vorbearbeitungsschneiden (13, 14, 15, 16, 17, 18) und Nachbearbeitungsschneiden (19, 20, 21, 22, 23, 24) beispielsweise 15° - 25° an allen Nachbearbeitungsschneiden.

4. Zerspanungswerkzeug nach Anspruch 1, 2 oder 3, **dadurch gekennzeichnet, dass** die Vorbearbeitungsschneiden (13, 14, 15, 16, 17, 18) äquidistant über den Umfang verteilt sind und die Nachbearbeitungsschneiden (19, 20, 21, 22, 23, 24) äquidistant über den Umfang verteilt sind.

5. Zerspanungswerkzeug nach einem der vorhergehenden Ansprüche, **dadurch gekennzeichnet, dass** die Schneidenecken zumindest an den Vorbearbeitungsschneiden abgerundet sind, vorzugsweise mit einem Radius von 0,1 mm - 0,5 mm.

6. Zerspanungswerkzeug nach einem der vorhergehenden Ansprüche, **dadurch gekennzeichnet, dass** die Mehrzahl Hauptspannuten (1, 2, 3, ,4, 5, 6) und die entsprechende Mehrzahl jeweils einer der Hauptspannuten (1, 2; 3, ,4, 5, 6) in Umfangsrichtung nacheilender Nebenspannuten (7, 8, 9, 10, 11, 12) vier oder sechs ist.

7. Zerspanungswerkzeug nach einem der vorhergehenden Ansprüche, **dadurch gekennzeichnet, dass** die unverdrallten oder nahezu unverdrallten Vor- und Nachbearbeitungsschheiden (14, 16, 18, 19, 21, 23) mit einem Drallwinkel von -2 bis 2° verlaufen, bevorzugt unverdrallt mit 0°.

8. Zerspanungswerkzeug nach einem der vorhergehenden Ansprüche, **dadurch gekennzeichnet, dass** die rechtsverdrallten Schneiden (13, 15, 17, 20, 22, 24) mit einem Drallwinkel von 6° bis 10° verlaufen, bevorzugt mit 8°.

9. Zerspanungswerkzeug nach einem der vorhergehenden Ansprüche, **dadurch gekennzeichnet, dass** die Schneidenlänge der Vor- und Nachbearbeitungsschneiden (13, 14, 15, 16, 17, 18, 19, 20, 21, 22, 23, 24) einem Wert von maximal 2 mal dem Werkzeugdurchmesser entspricht.

10. Zerspanungswerkzeug nach einem der vorhergehenden Ansprüche, **dadurch gekennzeichnet, dass** der Spanwinkel an allen Vorbearbeitungsschneiden unterschiedlich ist, insbesondere ansteigend ausgehend von einer Vorbearbeitungsschneide mit dem kleinsten Spanwinkel bis zu einer Vorbearbeitungsschneide mit dem größten Spanwinkel, vorzugsweise reihum um den Umfang ansteigend bis wieder die Vorbearbeitungsschneide mit dem kleinsten Spanwinkel auf die Vorbearbeitungsschneide mit dem größten Spanwinkel folgt, beispielsweise in Schritten von 3° - 5°, wobei der Spanwinkel bei einem Werkzeug mit vier Vor- und Nachbearbeitungsschneiden beispielsweise 5°, 8°, 11°, 14° an den vier Vorbearbeitungsschneiden beträgt.

11. Zerspanungswerkzeug nach einem der vorhergehenden Ansprüche, **dadurch gekennzeichnet, dass** die Vorbearbeitungsschneiden jeweils ohne Rundschlifffasen in eine Freifläche übergehen, wobei der Freiwinkel an allen Vorbearbeitungsstegen insbesondere unterschiedlich ist, vorzugsweise jeweils um 3° - 5° ansteigend ausgehend von einem Vorbearbeitungssteg mit dem kleinsten Freiwinkel bis zu einem Vorbearbeitungssteg mit dem größten Freiwinkel, und beispielsweise bei einem Werkzeug mit vier Vor- und Nachbearbeitungsstegen 12°, 17°, 22°, 27° an den vier Vorbearbeitungsstegen beträgt, wobei vorzugsweise der kleinste Freiwinkel an dem Vorbearbeitungssteg mit der Vorbearbeitungsschneide mit dem kleinsten Spanwinkel vorgesehen ist und der Freiwinkel an den einzelnen Vorbearbeitungsstegen mit dem dortigen Spanwinkel ansteigt, beispielsweise bei einem Werkzeug mit vier Vor- und Nachbearbeitungsstegen mit aufsteigendem Spanwinkel von 5°, 8°, 11°, 14° ein Freiwinkel von 12° an der Vorbearbeitungsschneide mit 5° Spanwinkel, ein Freiwinkel von 17° an der Vorbearbeitungsschneide mit 8° Spanwinkel, ein Freiwinkel von 22° an der Vorbearbeitungsschneide mit 11° Spanwinkel, und ein Freiwinkel von 27° an der Vorbearbeitungsschneide mit 14° Spanwinkel.

12. Zerspanungswerkzeug nach einem der vorhergehenden Ansprüche, **dadurch gekennzeichnet, dass** der Spanwinkel an allen Nachbearbeitungsschneiden unterschiedlich ist, vorzugsweise jeweils um 3° - 5° ansteigend ausgehend von einer Nachbearbeitungsschneide mit dem kleinsten Spanwinkel bis zu einer Nachbearbeitungsschneide mit dem größten Spanwinkel, beispielsweise bei einem Werkzeug mit vier Vor- und Nachbearbeitungsschneiden 10°, 14°, 18°, 22°, wobei der Spanwinkel bevorzugt an derjenigen Nachbearbeitungsschneide am größten ist, die derjenigen Vorbearbeitungsschneide mit dem kleinsten Spanwinkel nacheilt, und mit dem ansteigenden Spanwinkel an der jeweils voreilenden Vorbearbeitungsschneide fällt, bis der Spanwinkel an derjenigen Nachbearbeitungsschneide am kleinsten ist, die der Vorbearbeitungsschneide mit dem größten Spanwinkel nacheilt.

13. Zerspanungswerkzeug nach einem der vorhergehenden Ansprüche, **dadurch gekennzeichnet, dass** der Freiwinkel an allen Nachbearbeitungsschneiden unterschiedlich ist, vorzugsweise jeweils um 3° - 5° ansteigend ausgehend von einer Nachbearbeitungsschneide mit dem kleinsten Freiwinkel bis zu einer Nachbearbeitungsschneide mit dem größten Freiwinkel, wobei der Freiwinkel bevorzugt an derjenigen Nachbearbeitungsschneide am größten ist, die derjenigen Vorbearbeitungsschneide mit dem kleinsten Freiwinkel nacheilt, und mit dem ansteigenden Freiwinkel an der jeweils voreilenden Vorbearbeitungsschneide fällt, bis der Freiwinkel an derjenigen Nachbearbeitungsschneide am kleinsten ist, die der Vorbearbeitungsschneide mit dem größten Spanwinkel nacheilt.

14. Verfahren zur Reparatur eines beschädigten Bauteils aus faserverstärktem Kunststoff wie z.B. CFK, wobei an dem abschließend mit einem Flicken zu verklebendem Bauteil Treppenstufen insbesondere mit einer Höhe und Breite von 0,1 mm - 0,5 mm, sich um eine Schadensstelle wie z.B. eine fehlerhafte Bohrung herum terasssenförmig zum Flicken hin öffnend oder entlang einer Wand terasssenförmig zum Flicken hin ansteigend eingearbeitet werden, **dadurch gekennzeichnet, dass** die Treppenstufen mit einem Stirnfräser nach einem der vorhergehenden Ansprüche eingefräst werden.

15. Verfahren zum Trennen von Platten aus faserverstärktem Kunststoff wie z.B. CFK mit einer Stärke von unter 3mm, bevorzugt unter 1,5 mm, **dadurch gekennzeichnet, dass** mit einem Stirnfräser nach einem der vorhergehenden Ansprüche 1 - 14 entlang der gewünschten Trennlinie gefräst wird.

## Revendications

1. Outil à enlèvement de copeaux, en particulier fraise en bout, destiné à l'usinage de matériaux renforcés de fibres, tels que le plastique renforcé de fibres de carbone, le plastique renforcé de fibres de verre ou les plastiques renforcés de fils de polyester, comprenant
une pluralité de quatre ou six rainures à copeaux principales (1, 2, 3, 4, 5, 6) qui forment, avec une nervure de préusinage située respectivement derrière, un taillant ayant un tranchant de préusinage (13, 14, 15, 16, 17, 18),
une pluralité de rainures à copeaux secondaires (7, 8, 9, 10, 11, 12), correspondant à ladite pluralité de rainures à copeaux principales (1, 2, 3, 4, 5, 6), qui sont situées derrière respectivement l'une des rainures à copeaux principales (1, 2, 3, 4, 5, 6) dans la direction circonférentielle et qui espacent, dans la direction circonférentielle, respectivement une nervure d'usinage postérieur de la nervure de préusinage située devant dans la direction circonférentielle, et forment, avec la nervure d'usinage postérieur, un taillant ayant un tranchant d'usinage postérieur (19, 20, 21, 22, 23, 24),
**caractérisé par le fait que**
les tranchants de préusinage (13, 14, 15, 16, 17, 18) s'étendent le long de l'axe de l'outil alternativement avec une torsion droite autour de, d'un côté, et sans torsion ou au moins avec une torsion d'une valeur plus faible par rapport à la torsion droite du tranchant de préusinage situé directement devant, de l'autre côté, dans lequel
les tranchants d'usinage postérieur (19, 21, 23) situés derrière les tranchants de préusinage (13, 15, 17) à torsion droite s'étendent, le long de l'axe de l'outil, sans torsion ou au moins avec une torsion d'une valeur plus faible par rapport à la torsion droite du tranchant de préusinage situé directement devant, et dans lequel
les tranchants d'usinage postérieur (20, 22, 24) situés derrière les tranchants de préusinage (14, 16, 18) qui sont exempts de torsion ou s'étendent au moins avec la torsion d'une valeur plus faible par rapport à la torsion droite du tranchant de préusinage (13, 15, 17) situé directement devant, s'étendent avec une torsion droite autour de l'axe de l'outil.

2. Outil à enlèvement de copeaux selon la revendication 1, **caractérisé par le fait que** l'angle de coupe sur l'ensemble des tranchants d'usinage postérieur (19, 20, 21, 22, 23, 24) est supérieur à l'angle de coupe sur le tranchant de préusinage (13, 14, 15, 16, 17, 18) situé respectivement devant.

3. Outil à enlèvement de copeaux selon la revendication 1 ou 2, **caractérisé par le fait que** l'angle de phase d'un coin de tranchant sur chaque tranchant de préusinage (13, 14, 15, 16, 17, 18) situé devant, par rapport à un coin de tranchant sur le tranchant d'usinage postérieur (19, 20, 21, 22, 23, 24) situé respectivement derrière est inférieur à l'angle de phase du coin de tranchant de chaque tranchant d'usinage postérieur (19, 20, 21, 22, 23, 24) situé derrière, par rapport au coin de tranchant sur le tranchant de préusinage (13, 14, 15, 16, 17, 18) situé respectivement derrière, et est compris, par exemple, entre à peu près 20° et 35° sur l'ensemble des tranchants d'usinage postérieur dans le cas d'un outil ayant quatre tranchants de préusinage et tranchants d'usinage postérieur, est compris, par exemple, entre 15° et 25° sur l'ensemble des tranchants d'usinage postérieur dans le cas d'un outil ayant six tranchants de préusinage (13, 14, 15, 16, 17, 18) et tranchants d'usinage postérieur (19, 20, 21, 22, 23, 24).

4. Outil à enlèvement de copeaux selon la revendication 1, 2 ou 3, **caractérisé par le fait que** les tranchants de préusinage (13, 14, 15, 16, 17, 18) sont répartis à distances égales sur la circonférence et que les tranchants d'usinage postérieur (19, 20, 21, 22, 23, 24) sont répartis à distances égales sur la circonférence.

5. Outil à enlèvement de copeaux selon l'une quelconque des revendications précédentes, **caractérisé par le fait que** les coins de tranchant au moins sur les tranchants de préusinage sont arrondis, de préférence avec un rayon compris entre 0,1 mm et 0,5 mm.

6. Outil à enlèvement de copeaux selon l'une quelconque des revendications précédentes, **caractérisé par le fait que** ladite pluralité de rainures à copeaux principales (1, 2, 3, 4, 5, 6) et la pluralité correspondante de rainures à copeaux secondaires (7, 8, 9, 10, 11, 12) qui sont situées derrière respectivement l'une des rainures à copeaux principales (1, 2, 3, 4, 5, 6) dans la direction circonférentielle est de quatre ou six.

7. Outil à enlèvement de copeaux selon l'une quelconque des revendications précédentes, **caractérisé par le fait que** les tranchants de préusinage et d'usinage postérieur (14, 16, 18, 19, 21, 23) qui sont exempts de torsion ou à peu près exempts de torsion s'étendent à un angle de torsion compris entre -2° et 2°, de préférence sans torsion à 0°.

8. Outil à enlèvement de copeaux selon l'une quelconque des revendications précédentes, **caractérisé par le fait que** les tranchants (13, 15, 17, 20, 22, 24) à torsion droite s'étendent à un angle de torsion compris entre 6° et 10°, de préférence à 8°.

9. Outil à enlèvement de copeaux selon l'une quelconque des revendications précédentes, **caractérisé par le fait que** la longueur de tranchant des tranchants de préusinage et d'usinage postérieur (13, 14, 15, 16, 17, 18, 19, 20, 21, 22, 23, 24) correspond à une valeur de deux fois le diamètre de l'outil au maximum.

10. Outil à enlèvement de copeaux selon l'une quelconque des revendications précédentes, **caractérisé par le fait que** l'angle de coupe est différent sur l'ensemble des tranchants de préusinage, en particulier croissant à partir d'un tranchant de préusinage ayant l'angle de coupe le plus petit jusqu'à un tranchant de préusinage ayant l'angle de coupe le plus grand, de préférence croissant tour à tour autour de la circonférence jusqu'à ce que, à nouveau, le tranchant de préusinage ayant l'angle de coupe le plus petit suive le tranchant de préusinage ayant l'angle de coupe le plus grand, par exemple à des pas de 3° à 5°, l'angle de coupe dans le cas d'un outil ayant quatre tranchants de préusinage et d'usinage postérieur étant, par exemple, de 5°, de 8°, de 11°, de 14° sur les quatre tranchants de préusinage.

11. Outil à enlèvement de copeaux selon l'une quelconque des revendications précédentes, **caractérisé par le fait que** les tranchants de préusinage passent chacun sans chanfreins de rectification cylindrique dans une face de dépouille, l'angle de dépouille étant en particulier différent sur l'ensemble des nervures de préusinage, de préférence croissant de 3° à 5° respectivement, à partir d'une nervure de préusinage ayant l'angle de dépouille le plus petit jusqu'à une nervure de préusinage ayant l'angle de dépouille le plus grand, et est de 12°, de 17°, de 22°, de 27° sur les quatre nervures de préusinage dans le cas d'un outil ayant quatre nervures de préusinage et d'usinage postérieur, dans lequel, de préférence, l'angle de dépouille le plus petit est prévu sur la nervure de préusinage avec le tranchant de préusinage ayant l'angle de coupe le plus petit, et l'angle de dépouille sur les nervures de préusinage individuelles augmente avec l'angle de coupe y présent, par exemple, dans le cas d'un outil comprenant quatre nervures de préusinage et d'usinage postérieur ayant un angle de coupe croissant de 5°, de 8°, de 11°, de 14°, un angle de dépouille de 12° sur le tranchant de préusinage ayant un angle de coupe de 5°, un angle de dépouille de 17° sur le tranchant de préusinage ayant un angle de coupe de 8°, un angle de dépouille de 22° sur le tranchant de préusinage ayant un angle de coupe de 11°, et un angle de dépouille de 27° sur le tranchant de préusinage ayant un angle de coupe de 14°.

12. Outil à enlèvement de copeaux selon l'une quelconque des revendications précédentes, **caractérisé par le fait que** l'angle de coupe est différent sur l'ensemble des tranchants d'usinage postérieur, de préférence croissant de 3° à 5° respectivement, à partir d'un tranchant d'usinage postérieur ayant l'angle de coupe le plus petit jusqu'à un tranchant d'usinage postérieur ayant l'angle de coupe le plus grand, par exemple de 10°, de 14°, de 18°, de 22° dans le cas d'un outil ayant quatre tranchants de préusinage et d'usinage postérieur, dans lequel, de préférence, l'angle de coupe est le plus grand sur le tranchant d'usinage postérieur qui est situé derrière le tranchant de préusinage ayant l'angle de coupe le plus petit, et diminue avec l'angle de coupe croissant sur le tranchant de préusinage situé respectivement devant, jusqu'à ce que l'angle de coupe soit le plus petit sur le tranchant d'usinage postérieur qui est situé derrière le tranchant de préusinage ayant l'angle de coupe le plus grand.

13. Outil à enlèvement de copeaux selon l'une quelconque des revendications précédentes, **caractérisé par le fait que** l'angle de dépouille est différent sur l'ensemble des tranchants d'usinage postérieur, de préférence croissant de 3° à 5° respectivement, à partir d'un tranchant d'usinage postérieur ayant l'angle de dépouille le plus petit jusqu'à un tranchant d'usinage postérieur ayant l'angle de dépouille le plus grand, dans lequel, de préférence, l'angle de dépouille est le plus grand sur le tranchant d'usinage postérieur qui est situé derrière le tranchant de préusinage ayant l'angle de dépouille le plus petit, et diminue avec l'angle de dépouille croissant sur le tranchant de préusinage situé respectivement devant, jusqu'à ce que l'angle de dépouille soit le plus petit sur le tranchant d'usinage postérieur qui est situé derrière le tranchant de préusinage ayant l'angle de coupe le plus grand.

14. Procédé de réparation d'un composant endommagé en plastique renforcé de fibres, tel que le plastique renforcé de fibres de carbone, dans lequel des marches d'escalier présentant en particulier une hauteur et une largeur comprise entre 0,1 mm et 0,5 mm, sont réalisées sur le composant à coller finalement par une pièce de raccommodage, de manière à s'ouvrir en terrasse vers ladite pièce de raccommodage autour d'un point endommagé, tel qu'un perçage incorrect par exemple, ou de manière à monter en terrasse le long d'une paroi vers la pièce de raccommodage, **caractérisé par le fait que** les marches d'escalier sont fraisées au moyen d'une fraise en bout selon l'une quelconque des revendications précédentes.

15. Procédé de de séparation des plaques de plastique renforcé de fibres, tel que le plastique renforcé de fibres de carbone d'une épaisseur inférieure à 3 mm, de préférence inférieure à 1, 5 mm, **caractérisé par le fait que** avec une fraise en bout selon l'une quelconque des revendications précédentes 1 - 14 est fraisée le long de la ligne de séparation désirée.
